(19) Europäisches Patentamt

European Patent Office

Office européen des brevets

(11) **EP 2 449 359 B1**

(12) **EUROPEAN PATENT SPECIFICATION**

(45) Date of publication and mention
of the grant of the patent:
**01.01.2020 Bulletin 2020/01**

(21) Application number: **10793465.5**

(22) Date of filing: **02.07.2010**

(51) Int Cl.:
*G01N 15/00* (2006.01)     *G01N 15/02* (2006.01)
*G01N 15/06* (2006.01)

(86) International application number:
**PCT/CA2010/000995**

(87) International publication number:
**WO 2011/000088 (06.01.2011 Gazette 2011/01)**

(54) **PARTICLE CLASSIFIER**

PARTIKELKLASSIFIZIERER

CLASSIFICATEUR DE PARTICULES

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **02.07.2009 US 222890 P**

(43) Date of publication of application:
**09.05.2012 Bulletin 2012/19**

(73) Proprietor: **The Governors of the University of
Alberta
Edmonton, Alberta T5J 4P6 (CA)**

(72) Inventor: **OLFERT, Jason
Edmonton, Alberta T6G 2G8 (CA)**

(74) Representative: **Rankin, Douglas et al
Marks & Clerk LLP
Aurora
120 Bothwell Street
Glasgow G2 7JS (GB)**

(56) References cited:
WO-A1-99/41588     GB-A- 2 416 913
JP-A- H02 237 657     US-A- 3 429 187
US-A- 4 640 140     US-A- 4 824 738
US-A- 5 428 229     US-A1- 2005 028 616
US-B1- 6 251 296

- **OHMURA N ET AL: "Particle classification in Taylor vortex flow with an axial flow", JOURNAL OF PHYSICS: CONFERENCE SERIES, INSTITUTE OF PHYSICS PUBLISHING, BRISTOL, GB, vol. 14, no. 1, 1 January 2005 (2005-01-01), pages 64-71, XP020093777, ISSN: 1742-6596, DOI: 10.1088/1742-6596/14/1/009**
- **J.S OLFERT ET AL: "the experimental transfer function of the couette centrifugal particle amss analyzer", JOURNAL OF AEROSOL SCIENCE, vol. 37, 31 December 2006 (2006-12-31), pages 1840-1852, XP002722405,**
- **HAGWOOD C. ET AL.: 'The DMA Transfer Function with Brownian Motion; A Trajectory/Monte Carlo Approach' AEROSOL SCIENCE AND TECHNOLOGY, [Online] vol. 30, 1999, pages 40 - 61, XP008165481 Retrieved from the Internet: <URL:http://fire.nist.gov/bfrlpubs/fire99/PDF/f99011.pdf> [retrieved on 2010-08-24]**
- **FISSAN H. ET AL.: 'Experimental Comparisons of Four Differential Mobility Analysers for Nanometre Aerosol Measurements' AEROSOL SCIENCE AND TECHNOLOGY, [Online] vol. 24, 1996, pages 1 - 13, XP008165480 Retrieved from the Internet: <URL:http://www.informaworld.com/smpp/conte nt~db=all~content=a778908039> [retrieved on 2010-08-24]**

- N. OHMMA ET AL.: 'Particle Classification in Taylor Vortex Flow With an Axial Flow' JOURNAL OF PHYSICS:CONFERENCE SERIES, [Online] vol. 14, 2005, pages 64 - 71, XP020093777 Retrieved from the Internet: <URL:http://iopscience.iop.org/1742-6596/14/1/009/pdf/jpconf5_14_009.pdf.> [retrieved on 2010-08-24]

**Description**

TECHNICAL FIELD

Aerosol particle classifiers.

BACKGROUND

Aerosol classifiers are used to produce a monodisperse aerosol, that is, they select a narrow range of particles from a larger distribution of particles. This method is used for many applications including; nano-particle generation, measuring distributions of particles in air, measuring the deposition of particles in filters and other devices, sampling ambient aerosols, and many others. These measurements are often done in research areas as diverse as: nano-technology, pharmaceutical research, health-effects studies, inhalation toxicology, bio-aerosol detection, filter testing, indoor-air quality studies, industrial hygiene, energy and combustion research, automotive emissions measurements, and atmospheric and climate-change research.

Currently, the most commonly used classifier is called the Differential Mobility Analyzer (DMA, Knutson and Whitby 1975). The DMA classifies particles based on their electrical mobility, that is, the motion of a charged particle in an electrostatic field. By controlling the electrostatic field and the flow between two cylinders the particles are classified by their electrical mobility, which is related to the number of electric charges on the particle and the drag experienced by the particle, which is a function of the particle's size and shape. For non-spherical particles an equivalent diameter, called the electrical mobility equivalent diameter is defined for these particles, which have the same electrical mobility of a spherical particle of the same size. To classify particles with this instrument an electric charge must be placed on these particles using charging methods such radioactive-source charge neutralizers or corona discharge. However, with all charging methods not a single charge is placed on each particle but rather a distribution of charges are placed on the population of particles. For example, particles may obtain one, two, three, or more positive charges; one, two, three, or more negative charges or no charge at all. The electrical mobility of the particles is a function of the number of charges on the particle and its drag. Therefore, a smaller particle with one charge will have the same electrical mobility as a larger particle with two charges. Thus, the aerosol sample that is classified by the DMA will not be truly monodisperse in terms of particle size, but rather it will have a mix of sizes corresponding to an integer number of charged particles. Techniques are used to minimize the number of charge states but the DMA can never produce a truly monodisperse aerosol. For some applications (like measuring size distributions) the error introduced by the charge distribution can be corrected using inversion techniques, but it can never be fully eliminated. In other applications and experiments, these extra particle sizes can degrade performance or skew results.

Another technique has been used to classify particles by their mass-to-charge ratio is an instalment called the Aerosol Particle Mass analyzer (APM, Ehara et al 1996, Ehara 1995) or the Couette Centrifugal Particle Mass Analyzer (Couette CPMA, Rushton and Reavell 2004, Olfert and Collings 2005). With these instalments charged particles are classified between two rotating cylinders with electrostatic and centrifugal forces. A similar charging mechanism is applied to charge the particles. Therefore, particles of the same mass-to-charge ratio will be classified. For example, a particle with one charge will be classified at the same time as a particle with twice the mass and twice the number of charges. Therefore, the APM or Couette CPMA do not produce a truly monodisperse aerosol.

Other aerosol and particle instalments are based on measuring what is called the 'aerodynamic' diameter of the particle. The aerodynamic equivalent diameter is defined as the diameter of a spherical particle with a density of water that has the same terminal velocity as the actual particle Instalments that measure the aerodynamic size of particles include various kinds of impactors (Marple et al, 1991, Keskinen et al, 1992), virtual impactors (Conner, 1966), and aerodynamic lenses (Liu et al, 1995a, 1995b). However, these methods only provide a means of dividing the aerosol sample in half, where particles larger than the cut-off point are classified in one direction (i e , impacted onto the impaction plate) and particles smaller than the cut-off point continue with the flow. Often, several of these stages are stacked together to provide classification into several large bins. There is currently no instalment that classifies particles by their aerodynamic diameter and produces a monodisperse aerosol.

US 2005/028616 discloses a cascade impactor apparatus having a series of vertically stacked impactor housing sections. GB 2416913 discloses a centrifugal particle mass analyzer for removing particles from an aerosol. WO 99/41588 discloses a method and apparatus for measuring aerodynamic particle size.

JP H02 237657 discloses a method and device for centrifugally classifying aerosol particles.

US 6251296 discloses a particle separation member for use with a cyclone separator.

US 3429187 discloses a centrifugally operated device for producing a true particle size spectrum from an aerosol.

US 4640140 discloses an aerosol sampler with cascade impaction and uniform deposition.

Ohmura N et al. disclose in "Particle classification in Taylor vortex flow with an axial flow" in the Journal of Physics: Conference Series, Institute of Physics Publishing, Bristol, GB, vol. 14, no. 1 of 1 January 2005, pages 64-71 a particle classification phenomenon in Taylor vortex flow with axial flow. J.S Olfert et al. disclose in "The experimental transfer function of the Couette centrifugal particle mass analyzer" of the Journal of Aerosol Science, vol. 37, 31 December 2006, pages 1840-1852, the experimental transfer function of the Couette centrifugal particle mass analyzer.

SUMMARY

According to the present invention, there is provided apparatus for classifying aerosol particles suspended in a gas and producing a monodisperse aerosol as defined in the appended claims. The applicant has devised a new instrument, called the Aerodynamic Particle Classifier (APC) that provides classification of particles.

BRIEF DESCRIPTION OF THE FIGURES

Embodiments will now be described with reference to the figures, in which like reference characters denote like elements, by way of example, and in which:

Fig. 1 is a schematic of an Aerosol Particle Classifier (APC) (not to scale) with a cylindrical flow path;
Fig. 2 is a diagram showing details of the particle trajectory and flows between the cylinders in the embodiment of Fig. 1;
Fig. 3A is a graph of the normalized transfer function of the APC of Fig. 1;
Fig. 3B is a graph of the transfer function of the APC of Fig. 1 in terms of aerodynamic diameter for the operating conditions given in the description;
Fig. 4 is a schematic of an APC (not to scale) with a partial cylinder flow path; path, not part of the present invention;
Fig. 5 is a schematic of an APC (not to scale) with a curved flow path with boundaries shaped as surfaces of revolution, not part of the present invention;
Fig. 6 is a schematic of an APC (not to scale) with detectors on an outer cylinder defining the flow path, not part of the present invention;
Fig. 7A is a schematic showing an aerodynamic classifier with a particle counter; and
Fig. 7B is a schematic showing a particle charger with an aerodynamic classifier of the embodiment of Fig. 6.

DETAILED DESCRIPTION

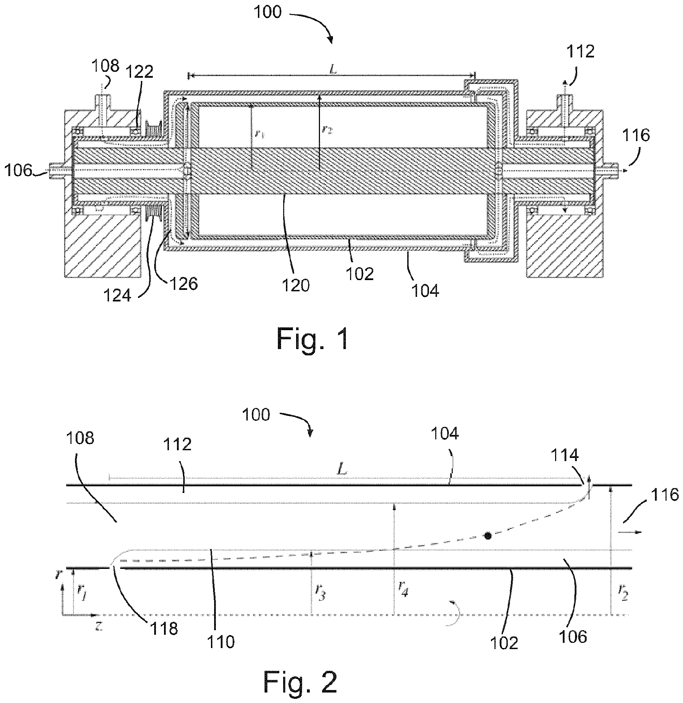

Figs. 1 and 2 show diagrams of an exemplary embodiment of the APC, generally denoted by 100. The APC disclosed here comprises two concentric cylinders, an inner cylinder 102 and an outer cylinder 104 rotating in the same direction and at a similar rotational speed (normally the two cylinders would be rotating at the same rotational speed although different speeds can also be used, see below). Referring to Fig. 1, in the embodiment shown the cylinders are attached to a rotating shaft 120 mounted on bearings 122 and rotated via pulley 124. These elements act as a drive to operate on the elements defining a carrier flow channel (in this embodiment by rotating them) to supply an acceleration (here a centripetal acceleration) to the elements defining the flow channel at an angle to the flow of fluid through the carrier flow channel. Referring to Fig. 2, a source of particles is connected to supply particles into suspension in the carrier fluid, in this embodiment slit 118 acting as a source. The particles, carried along by the aerosol flow 106 with flow rate $Q_a$, enter the gap between the two cylinders through slit 118 in the inner cylinder wall. A sheath flow 108 with flow rate $Q_{sh}$ is also introduced from a source of carrier fluid flow into the carrier flow channel between the two cylinders. In this embodiment an initial flow channel 126 acts as a source of carrier fluid by introducing the sheath flow into the carrier flow channel. It is assumed that flow is laminar and incompressible, which is a reasonable assumption for the geometry, flow rates, and gas pressure used in normal operation. In this embodiment the flow is axial in the frame of reference of the rotating cylinders, and tangential to the cylinders or to an imaginary cylinder coaxial with the cylinders; in an embodiment with cylinders rotating at different speeds the flow may still be tangential. In the absence of any centrifugal force (due to centripetal acceleration of the fluid containing the particles) the particles would travel between the two cylinders between the inner cylinder wall and the aerosol streamline 110. However, when the cylinders are rotated, the particles experience a centrifugal force in the direction of the outer cylinder and a drag force toward the centre of rotation. The centrifugal force both supplies the particles into the carrier flow and imparts a component of velocity across the carrier flow. Thus, in this example, the particles are not pre-mixed. The particles will also travel in the axial direction carried along by the aerosol flow and sheath flow. Therefore, the velocity of particles in the radial ( $v_r$ ) and axial ( $v_z$ ) direction will be:

$$ v_r = \frac{dr}{dt} = \frac{C_c}{3\pi\mu d_p} m\omega^2 r = \tau\omega^2 r \quad \text{and} \quad v_z = \frac{dz}{dt} = u_z, \qquad (1) $$

where $r$ is the radial position of the particle, $\omega$ is the rotational speed of the cylinders, $m$ is the mass of the particle, $d_p$ is the diameter of the particle, $\mu$ is the viscosity of the carrier gas, $C_c$ is the Cunningham slip correction factor for the particle, and $u_z$ is the velocity of the carrier gas in the axial direction. It will be assumed that the velocity profile is uniform (i.e., $u_z$ is constant). The particle relaxation time, $\tau$, is defined as,

$$\tau = \frac{C_c}{3\pi\mu d_p}m = \frac{C_c \rho_p d_p^{\,2}}{18\mu} = \frac{C_c \rho_0 d_{ae}^{\,2}}{18\mu},\qquad(2)$$

where $\rho_p$ is the true particle density, $\rho_0$ is unit density (1000 kg/m$^3$), and $d_{ae}$ is the so-called aerodynamic diameter of the particle.

Using the chain rule and differentiating, the radial position of the particle can be found as a function of the axial position,

$$r(z) = r_{in}\exp\left(\frac{\tau\omega^2 z}{u_z}\right),\qquad(3)$$

where $r_{in}$ is the initial position of the particle when it enters the classifier.

A classification system classifies the suspended particles according to their trajectories. In the embodiment shown particles are classified according to whether their trajectories bring them through sampling exit 114. The transfer function of the instrument (the distribution of particles that leave the classifier at any given operating condition) can be found by determining the trajectory of the particles. A sample flow 112 with flow rate $Q_s$ exits the classifier through sampling exit 114. In the embodiment shown, the sample flow is part of the sheath flow. The remainder of the sheath flow and the aerosol flow exit the classifier as exhaust flow 116. Defining $r_1$ as the outer radius of the inner cylinder, $r_2$ as the inner radius of the outer cylinder, $r_3$ as the outer radius of the aerosol flow, and $r_4$ as the inner radius of the sample flow, the largest particle (i.e., the largest $\tau$) that will pass through the classifier, exiting the classifier in the sample flow 112, will start at $r_{in} = r_1$ and will reach $r_2$ at the end of the classifier ($z=L$). Therefore,

$$\tau_{max} = u_z\frac{\ln(r_2/r_1)}{\omega^2 L} = \frac{(Q_{sh}+Q_a)}{\pi(r_2^2 - r_1^2)}\frac{\ln(r_2/r_1)}{\omega^2 L}.\qquad(4)$$

The smallest particle that will be classified, $\tau_{min}$, will enter the classifier at $r_{in} = r_3$ and will reach $r_4$ at the end of the classifier. The radii $r_3$ and $r_4$ can be related to the radii $r_1$ and $r_2$, realizing that for uniform flow,

$$u_z = \frac{Q_{sh}+Q_a}{\pi(r_2^2 - r_1^2)} = \frac{Q_{sh}}{\pi(r_2^2 - r_3^2)} = \frac{Q_s}{\pi(r_2^2 - r_4^2)}.\qquad(5)$$

Therefore,

$$\tau_{min} = \frac{(Q_{sh}+Q_a)}{\pi\omega^2 L(r_2^2 - r_1^2)}\ln\left(\frac{Q_{sh}+Q_a+Q_s(1-r_1^2/r_2^2)}{Q_{sh}+Q_a-Q_{sh}(1-r_1^2/r_2^2)}\right).\qquad(6)$$

Particles with $\tau > \tau_{max}$ will intercept the outer cylinder wall before reaching the exit slit and will adhere to the cylinder surface, while particles with $\tau < \tau_{min}$ will flow past the exit slit and be carried out of the instrument with the exhaust flow. The particles adhere to the wall of the outer cylinder due to van der Waals forces (Friedlander, 2000) and will remain there until the cylinder is cleaned. (Like the DMA, under normal operating conditions and aerosol concentrations, the cylinder will only need to be cleaned once every few months.) Between the maximum and minimum relaxation times, only a fraction of the particles will be classified. A particle must migrate into the sample flow, defined by the sample streamline ($r_4 \leq r < r_2$), by the time the particle has reached the end of the classifier. For particles with $\tau > \tau_{min}$, only particles with an initial radial position $r_c \leq r < r_3$ will be classified, where $r_c$ is called the critical radius. The limiting trajectory for $\tau > \tau_{min}$ will be the particle that starts at $r_c$ and reaches $r_4$. Substituting this condition into Eq. 3 and solving for the

aerosol fraction, $f_1$, that is classified reveals,

$$f_1 = \frac{Q_{sh} + Q_a - \exp\left(\dfrac{-2\tau\omega^2 L\pi(r_2^2 - r_1^2)}{Q_{sh} + Q_a}\right)(Q_{sh} + Q_a - Q_s(1 - r_1^2/r_2^2))}{Q_a(1 - r_1^2/r_2^2)} - \frac{Q_{sh}}{Q_a}. \qquad (7)$$

Likewise, for particles with $\tau < \tau_{max}$, the particles starting at the critical radius, $r_c$, must reach $r_2$ by the end of the classifier. In this case the fraction of the aerosol, $f_2$, that is classified is,

$$f_2 = \frac{Q_{sh} + Q_a}{Q_a}\left(1 - \frac{1 - \exp\left(\dfrac{-2\tau\omega^2 L\pi(r_2^2 - r_1^2)}{Q_{sh} + Q_a}\right)}{1 - r_1^2/r_2^2}\right). \qquad (8)$$

Furthermore, if the sample flow rate is smaller than the aerosol flow rate, then the transfer function cannot be larger than, $f_3 = Q_s/Q_a$.

The transfer function, $\Omega$, will be the minimum of these three fractions or one. Therefore, the transfer function can be expressed as, $\Omega = \max[0, \min(f_1, f_2, f_3, 1)]$.

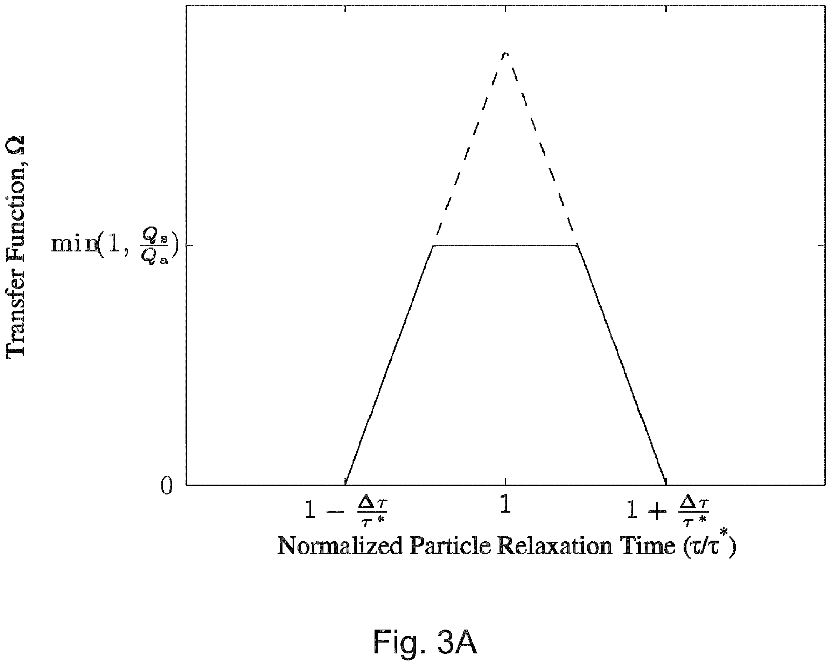

The normalized transfer function is shown in Fig. 3A, where the normalized particle relaxation time is defined as $\tau/\tau^*$. The value $\tau^*$ is the particle relaxation time at the centre of the transfer function and is defined as, $\tau^* = (\tau_{max} + \tau_{min})/2$. The half-width of the transfer function is defined as, $\Delta\tau = (\tau_{max} - \tau_{min})/2$.

It can be shown, that when the gap between the cylinders is small and $Q_a = Q_s$, then the relative width of the transfer function, $\Delta\tau/\tau^*$, is just the ratio of the aerosol to sheath flow rates, $\Delta\tau/\tau^* = Q_a/Q_{sh}$. To produce a highly monodisperse aerosol this ratio should approximately be in the range of 0.05 to 0.1.

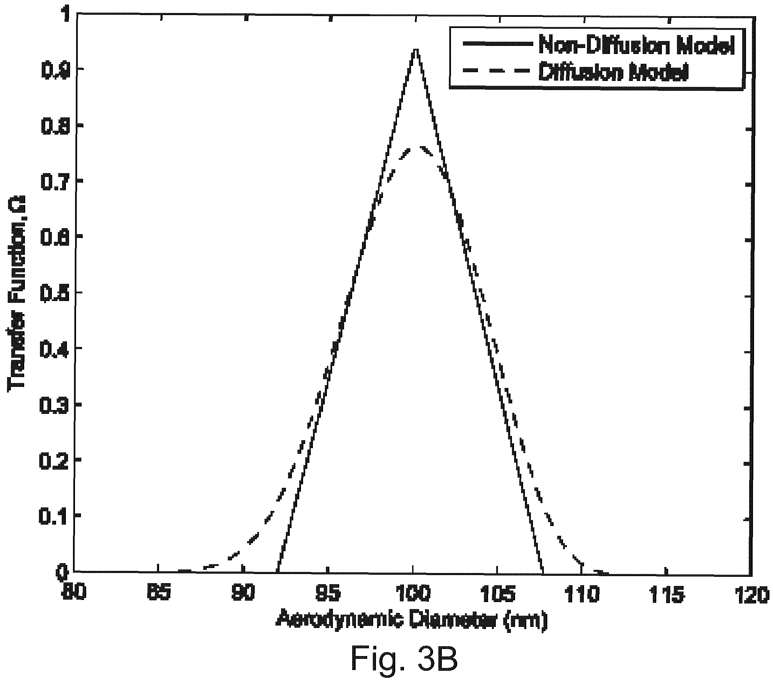

As an example some sample dimensions and operating conditions that are well suited for most applications are: $r_2$=37 mm, $r_1$=35 mm, $L$=200 mm, $Q_{sh}$=3 L/min, and $Q_a$=$Q_s$=0.3 L/min. In general, it is beneficial to keep the gap between the cylinders relatively small (i.e. $(r_2 - r_1) << r_1$), as smaller gaps increase the height of the transfer function. During operation the flow rates maybe changed to vary the width of the transfer function as desired as long as the flow remains laminar. An example of a transfer function of the APC is shown in Fig. 3B using the given dimensions. In this example, when the rotational speed is 5650 rpm the centre of the non-diffusion transfer function will be at $d_{ae}^*$ =100 nm, with the minimum and maximum sizes classified at 92 nm and 108 nm, respectively. A more complicated model was also developed which accounts for the effects due to particle diffusion within the classification region. The diffusion transfer function is also shown in Fig. 3b and it shows that the transfer function becomes broader and shorter when diffusion is included. This affect will become more prevalent for smaller particle sizes.

Thus, this embodiment of the APC will produce a very narrow, or monodisperse, size distribution. Using these same dimensions, the APC would be able to classify particles over an extremely wide range for example 10 nm to 10 $\mu$m using rotational speeds ranging from 20,000 to 95 rpm and smaller particle sizes could be classified by using higher rotational speeds (by comparison the DMA is typically used over a range of approximately 2.5 to 1,000 nm).

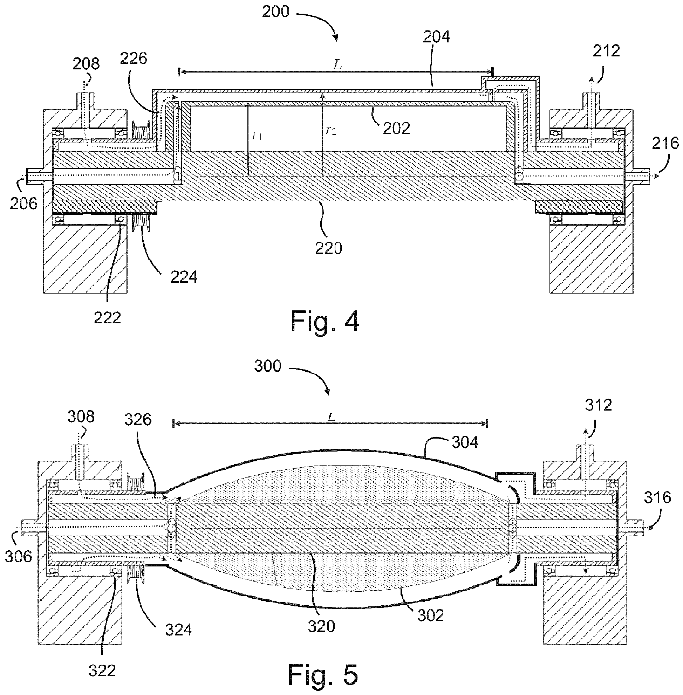

It should be noted that the analysis used here is very similar to the proven theoretical analysis used in the DMA, with the exception that the APC has a centrifugal force instead of an electrostatic force to classify the particles. Therefore, we have a sound basis for predicting that this theoretical model of the APC will closely match experimental data once a prototype is developed. Referring to Fig. 4, an APC 200 is shown with a rotating flow channel (multiple flow channels may be included around the central axis, but only one is shown in the figure). The flow channel may be defined by an inner partial cylindrical section 202 and an outer partial cylindrical section 204 although other shapes than partial cylindrical sections are possible. The example, not part of the present invention, may operate in a similar way as the embodiment of Fig. 1 except that the flow channel does not extend all the way around the central axis. In particular rotating shaft 220, bearings 222, pulley 224, sheath flow 208, aerosol flow 206, initial flow channel 226, sample flow 212 and exhaust flow 216 may be similar to their counterparts of Fig. 1 and cooperate similarly, except that the portions of the sheath flow and sample flow within the rotating parts of the classifier may not extend all the way around the central axis. Referring to Fig. 5, an APC 300 is shown with a flow channel defined by an inner surface 302 and an outer surface 304 which are not cylinders. This example is not part of the present invention. The surfaces may be surfaces of revolution. However, it would also be possible to use different shapes including partial surfaces of revolution that extend only part of the way around the central axis, as in Fig 4. Further shapes other than partial surfaces of revolution may also be used. The example, not part of the present invention, shown in Fig. 5 may operate in a similar way as the embodiment of Fig. 1 except for the different shape of the flow channel. In particular, rotating shaft 320, bearings 322, pulley 324, sheath flow 308, aerosol flow 306, initial flow channel 326, sample flow 312 and exhaust flow 316 may be similar to their counterparts of Fig. 1 and cooperate similarly, except where a different shape is appropriate to accommodate the shape of the flow channel.

In the analysis relating to Figs. 1 and 2 it was assumed that the cylinders were rotating at the same rotational speed. However, cylinders rotating at slightly different speeds can also be used. In this case it would be preferable to rotate the inner cylinder slightly faster than the outer cylinder. When this is done, and the speed difference is large enough, the centrifugal force will decrease as its radial position increases. This causes the particle trajectories in the classifier to slightly 'converge' near the end of the classifier, resulting in a higher transfer function. A similar method is used in the Couette CPMA to improve its transfer function and it is the key difference between it and the APM. However, as shown in the example above (Fig. 3B) the peak of the transfer function without the speed difference is already 0.95, therefore the added complexity of rotating the cylinders at slightly different speeds is mostly likely not worth the slight improvement in transfer function. If different rotational speeds are used it should be noted that the speed ratio must satisfy the Rayleigh criterion (i.e., it must not be the case that $(r_1/r_2)^2 > \omega_2/\omega_1$) beyond which the flow becomes unstable, thereby disturbing the classification of the particles.

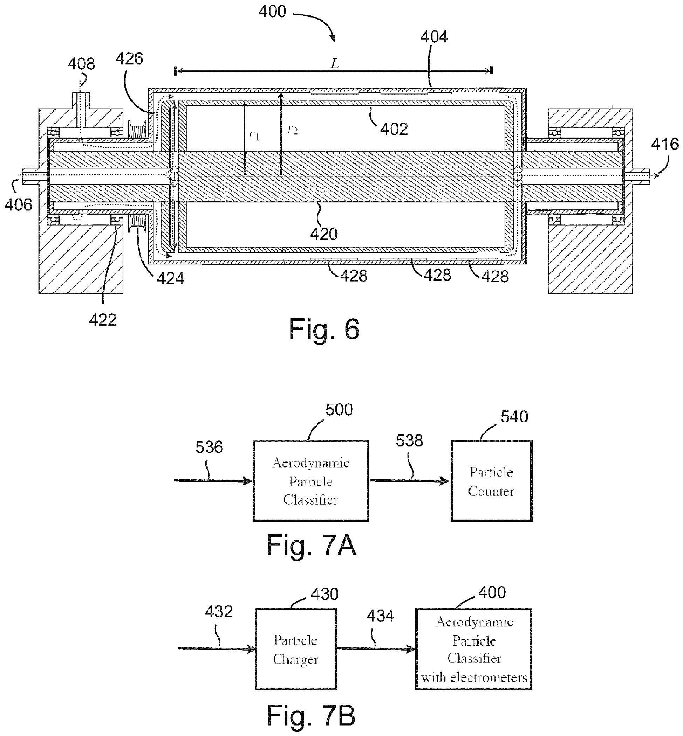

Thirdly, the above description describes how the APC can be used to produce a monodisperse aerosol based on the particle's aerodynamic diameter, much like how a DMA is used to produce a quasi-monodisperse aerosol based on the particle's electrical mobility diameter. DMA's are often combined with a condensation particle counter (CPC) to measure the number concentration of the quasi-monodisperse aerosol. Typically, the voltage controlling the electrostatic field in the DMA is 'scanned' over the range of the instrument, and by completing a data inversion of the CPC data, the size distribution of the aerosol can be determined. This combination of DMA and CPC is normally called, a Scanning Mobility Particle Sizer (SMPS). The same method can be employed by combining the APC with a CPC, or any other particle counting device, and by continuously 'scanning' the rotational speed or intermittently stepping the rotational speed. That is, a particle counter could be placed in or connected to the particle classification system or the outlet of the particle classification system in order to detect the concentration of particles of an aerodynamic diameter or other derived metric allowing them to reach the particle counter; the acceleration provided to the flow could be varied continuously or in steps, the aerodynamic diameter (or other metric related to the aerodynamic diameter) required to reach the particle counter changing with the acceleration provided to the flow, so that the particle counter measures a spectrum of aerodynamic diameter (or other metric related to the aerodynamic diameter) versus concentration as the acceleration provided to the flow varies. Referring to Fig. 7A, an aerodynamic classifier 500, which may be of any of the embodiments described above, is shown with a particle counter 540. An initial aerosol flow 536 enters the classifier which acts on the aerosol flow to produce a classified flow 538 containing a selected portion of the aerosol particles present in the initial aerosol flow. The classified flow may be for example a sampling flow. The particle counter may be for example a condensation particle counter. The embodiment shown in Fig. 7A may include embodiments used to measure a spectrum of aerodynamic diameter versus concentration or other embodiments.

Another way the APC can be used, which is not part of the present invention, to measure aerosol size distributions is by eliminating the aerosol exit slit and placing in the flow channel one or more detectors at which the particles may impact depending on their trajectory and measuring the number of particles impacting the one or more detectors. In an example, not part of the present invention, a detector may comprise a conductor connected to an electrometer circuit, for example in an annular example, the detector may comprise a conducting ring connected to an electrometer. The ring may be electrically isolated from both the remainder of the surface defining the flow channel and any other detection rings which may be present. The detectors may be situated at different axial locations along the outermost surface of the flow channel. Referring to Fig. 6, an APC 400 is shown having detectors 428 located in the flow channel at which particles may impact depending on their trajectory. In the embodiment shown the flow channel is defined by cylinders as in Fig. 1, although other shapes would also work. In this example, not part of the present invention, the detectors may be rings, electrically connected to electrometer circuits, extending around the inside of the outer cylinder. No sampling exit is necessary to classify particles when detectors are used to detect impacting particles, although the detectors could also be used in embodiments with a sampling exit. The example, not part of the present invention, shown in Fig. 6 may otherwise operate similarly to the embodiment of Fig. 1, in particular, the rotating shaft 420, bearings 422, pulley 424, sheath flow 408, aerosol flow 406, initial flow channel 426, and exhaust flow 416 may be similar to their counterparts of Fig. 1 and cooperate similarly, except that the articles of the aerosol flow are charged. In this system, the particles to be measured would be charged (most likely with a corona discharge-type charger or any other particle charging method, see Hinds, Aerosol Technology, Wiley, 1999). The charged particles would move down the classification section and impact the electrometer rings on the outer cylinder, thereby causing a measurable current in the electrometer ring, where the current is proportional to the number concentration of particles impacting the electrometer. Larger particles would impact the electrometer rings near the aerosol entrance and smaller particles would impact the rings near the aerosol exit. Referring to Fig. 7B an APC 400 with electrometers, such as for example the APC shown in Fig. 6, is shown with a particle charger 430. An uncharged aerosol flow 432 enters the particle charger 430 to produce a charged aerosol flow 434 comprising charged aerosol particles. The APC 400 operates on the charged aerosol flow 434 to classify the charged aerosol particles. By using a data inversion routine, the aerosol size distribution can be determined. Similar techniques have been used in DMA-like instruments like the differential mobility spectrometer (Reavell et al., A fast response particulate spectrometer for combustion aerosols. Society of Automotive Engineers, 2002) and the engine exhaust particle sizer (Johnson et al., An engine exhaust particle sizer spectrometer for transient emission particle measurements. Society of Automotive Engineers, 2004); where electrometer rings have been placed inside a DMA-like classification column.

Thus the applicant has devised a new instrument, called the Aerodynamic Particle Classifier (APC). As indicated, a detailed theoretical model has been developed for the instrument. The model shows the instrument can have excellent classification properties (i.e. wide range, high resolution, and high penetration efficiency) without requiring particle charging. This results in an instrument that in an embodiment can produce a true monodisperse aerosol without classifying multiply-charged particles like the DMA, APM, or CPMA. An APC could be combined in series with a DMA or CPMA in order to measure other important particle properties including: mobility diameter, particle mass, effective density, fractal-like dimension, and dynamic shape factor.

## Claims

1. An apparatus (100) for classifying aerosol particles suspended in a gas and producing a monodisperse aerosol, the apparatus comprising:

   two cylinders (102, 104) about a central rotational axis defining surfaces of a carrier flow channel or plurality of channels, including an outer surface;
   a source (126) of a substantially laminar carrier fluid flow into the carrier flow channel or channels, the carrier fluid not being pre-mixed with particles to be classified;
   a source of aerosol particles connected to supply the particles into suspension in the carrier fluid in the carrier flow channel or channels;
   a drive (124) connected to rotate the cylinders about the central rotational axis to supply an acceleration to the cylinders at an angle to the flow of fluid through the carrier flow channel or channels, the acceleration imparting radial motion on the suspended aerosol particles, the drive controlling a rotational speed of the cylinders independently of a flow rate of the carrier fluid flow; and
   a classification system for classifying the suspended aerosol particles according to their trajectories when the suspended particles move with a component of their velocity parallel to the axis of the rotation, in which the classification system comprises a sampling exit (112) located in the outer surface and an exhaust (116) to classify the suspended aerosol particles according to whether the trajectories of the suspended aerosol particles bring the suspended aerosol particles through the sampling exit to exit the apparatus as a monodisperse aerosol or flow past the sampling exit to be carried out of the classification system with the exhaust.

2. The apparatus (100) of claim 2, in which the carrier fluid is air.

3. The apparatus (100) of claim 1, in which the source of particles is supplied into the carrier flow channel by an opening substantially in the inner rotational surface of the carrier flow channel.

4. The apparatus (100) of any one of claims 1 to 3, in which the source of particles connected to supply the particles into suspension in the carrier fluid in the carrier flow channel or channels comprises elements defining a suspension flow channel or channels which intersects the carrier flow channel or channels, the suspension flow channel or channels being capable of directing a fluid containing suspended particles into the carrier flow channel or channels.

5. The apparatus (100) of claim 4, in which fluid flows at a suspension flow rate through the suspension flow channel or channels, and there is a sample flow (112) with a sample flow rate through the sampling exit (114) and an exhaust flow with an exhaust flow rate through the exhaust (116); and the drive controls the rotational speed of the cylinders independently of the supply flow rate, sample flow rate and exhaust flow rate.

## Patentansprüche

1. Gerät (100) zum Klassifizieren von Aerosolpartikeln, welche in einem Gas schweben und zum Erzeugen eines monodispersen Aerosols, wobei das Gerät Folgendes beinhaltet:

zwei Zylinder (102, 104) um eine mittlere Drehachse, welche Flächen eines Trägerstromkanals oder einer Vielzahl von Kanälen definieren, welche eine äußere Oberfläche umfassen;

eine Quelle (126) eines im Wesentlichen laminaren Trägerfluidstroms in den Trägerstromkanal oder die Trägerstromkanäle, wobei das Trägerfluids nicht mit den zu klassifizierenden Partikeln vorgemischt ist;

eine Aerosolpartikelquelle, welche für die Zufuhr von den Partikeln in eine Suspension in das Trägerfluid in dem Trägerstromkanal oder in den Trägerstromkanälen angeschlossen ist;

einen Antrieb (124), welcher angeschlossen ist, um die Zylinder um die mittlere Drehachse zu drehen, um eine Beschleunigung an die Zylinder in einem Winkel zu dem Fluidstrom durch den Trägerstromkanal oder die Trägerstromkanäle abzugeben, wobei die Beschleunigung radiale Bewegung auf die schwebenden Aerosolpartikel aufbringt, wobei der Antrieb eine Drehgeschwindigkeit der Zylinder unabhängig von einer Durchflussrate des Trägerfluidstroms steuert; und

ein Klassifizierungssystem zum Klassifizieren der schwebenden Aerosolpartikel entsprechend ihrer Bahnen, wenn sich die schwebenden Partikel mit einer Komponente ihrer Geschwindigkeit parallel zu der Drehachse bewegen, wobei das Klassifizierungssystem einen Probenentnahme-Ausgang (112) beinhaltet, welcher in der äußeren Oberfläche befindlich ist und einen Ablass (116) zum Klassifizieren der schwebenden Aerosolpartikel dementsprechend, ob die Bahnen der schwebenden Aerosolpartikel die schwebenden Aerosolpartikel durch den Probenentnahme-Ausgang bringen, um das Gerät als ein monodisperses Aerosol zu verlassen, oder ob sie am Probenentnahme-Ausgang vorbei strömen, um aus dem Klassifizierungssystem mit der Abluft ausgetragen zu werden.

**2.** Gerät (100) nach Anspruch 2, bei welchem das Trägerfluid Luft ist.

**3.** Gerät (100) nach Anspruch 1, bei welchem die Partikelquelle in den Trägerstromkanal durch eine Öffnung im Wesentlichen in der inneren Drehfläche des Trägerfluidkanals zugeführt wird.

**4.** Gerät (100) nach einem der Ansprüche 1 bis 3, bei welchem die Partikelquelle, welche zum Zuführen der Partikel in eine Suspension in das Trägerfluid in dem Trägerfluidkanal oder in den Trägerfluidkanälen angeschlossen ist, Elemente beinhaltet, welche einen Suspensions-Strömungskanal oder Suspensions-Strömungskanäle definieren, welche den Trägerstromkanal oder die Trägerstromkanäle kreuzen, wobei der Suspensions-Strömungskanal oder die Suspensions-Strömungskanäle in der Lage sind, ein schwebende Partikel enthaltendes Fluid in den Trägerstromkanal oder in die Trägerstromkanäle zu leiten.

**5.** Gerät (100) nach Anspruch 4, bei welchem Fluid bei einer Suspensions-Durchflussrate durch den Suspensions-Strömungskanal oder die Suspensions-Strömungskanäle strömt, und wobei ein Probenstrom (112) mit einer Probendurchflussrate durch den Probenentnahme-Ausgang (114) strömt und ein Ablassstrom mit einer Ablassdurchflussrate durch den Ablass (116) strömt; und der Antrieb die Drehgeschwindigkeit der Zylinder unabhängig von der Zufuhrdurchflussrate, der Probedurchflussrate und der Ablassdurchflussrate steuert.

## Revendications

**1.** Appareil (100) permettant de classifier les particules aérosol suspendues dans un gaz et de produire un aérosol monodispersé, l'appareil comprenant :

deux cylindres (102, 104) autour d'un axe de rotation central définissant des surfaces d'un canal de flux porteur ou d'une pluralité de canaux, incluant une surface extérieure ;

une source (126) d'un flux de fluide porteur sensiblement laminaire dans le canal ou les canaux de flux porteur, le fluide porteur n'étant pas prémélangé avec des particules à classifier ;

une source de particules aérosol raccordée de manière à fournir les particules en suspension dans le fluide porteur dans le canal ou les canaux de flux porteur ;

un système d'entraînement (124) raccordé de manière à faire tourner les cylindres autour de l'axe de rotation central permettant de fournir une accélération aux cylindres selon un angle relativement au flux de fluide à travers le canal ou les canaux de flux porteur, l'accélération provoquant un mouvement radial sur les particules aérosol suspendues, le système d'entraînement contrôlant une vitesse de rotation des cylindres indépendamment d'un débit du flux de fluide porteur ; et

un système de classification permettant de classifier les particules aérosol suspendues selon leurs trajectoires lorsque les particules suspendues se déplacent avec un composant de leur vitesse parallèle à l'axe de la rotation, dans lequel le système de classification comprend une sortie d'échantillonnage (112) située dans la surface extérieure et un échappement (116) permettant de classifier les particules aérosol suspendues selon lequel les trajectoires des particules aérosol suspendues amènent les particules aérosol suspendues à travers la sortie d'échantillonnage afin qu'elles sortent de l'appareil sous la forme d'un aérosol monodispersé ou d'un écoulement au-delà de la sortie d'échantillonnage à réaliser dans le système de classification avec l'échappement.

2. Appareil (100) selon la revendication 2, dans lequel le fluide porteur est l'air.

3. Appareil (100) selon la revendication 1, dans lequel la source de particules est fournie dans le canal de flux porteur par une ouverture sensiblement dans la surface de rotation interne du canal de flux porteur.

4. Appareil (100) selon l'une quelconque des revendications 1 à 3, dans lequel la source de particules raccordées permettant de fournir les particules en suspension dans le fluide porteur dans le canal ou les canaux de flux porteur comprend des éléments définissant un canal ou des canaux de flux de suspension qui coupent le canal ou les canaux de flux porteur, le canal ou les canaux de flux de suspension étant capables de diriger un fluide contenant des particules suspendues dans le canal ou les canaux de flux porteur.

5. Appareil (100) selon la revendication 4, dans lequel le fluide s'écoule à un débit de suspension à travers le canal ou les canaux d'écoulement de suspension, et il existe un flux échantillon (112) avec un débit d'échantillon à travers la sortie d'échantillonnage (114) et un flux d'échappement avec un débit d'échappement à travers l'échappement (116) ; et le système d'entraînement commande la vitesse de rotation des cylindres indépendamment du débit d'alimentation, du débit d'échantillon et du débit d'échappement.

Fig. 1

Fig. 2

Fig. 3A

Fig. 3B

Fig. 4

Fig. 5

Fig. 6

Fig. 7A

Fig. 7B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005028616 A
- GB 2416913 A
- WO 9941588 A
- JP H02237657 B
- US 6251296 B
- US 3429187 A
- US 4640140 A

**Non-patent literature cited in the description**

- Particle classification in Taylor vortex flow with an axial flow. **OHMURA N et al.** Journal of Physics: Conference Series. Institute of Physics Publishing, 01 January 2005, vol. 14, 64-71
- **J.S OLFERT et al.** The experimental transfer function of the Couette centrifugal particle mass analyzer. *Journal of Aerosol Science,* 31 December 2006, vol. 37, 1840-1852
- **HINDS.** Aerosol Technology. Wiley, 1999
- **REAVELL et al.** A fast response particulate spectrometer for combustion aerosols. *Society of Automotive Engineers,* 2002
- **JOHNSON et al.** An engine exhaust particle sizer spectrometer for transient emission particle measurements. *Society of Automotive Engineers,* 2004